# EUROPÄISCHE PATENTSCHRIFT

(11) **EP 1 621 375 B1**
(45) Veröffentlichungstag und Bekanntmachung des Hinweises auf die Patenterteilung: **25.06.2008**
(21) Anmeldenummer: 05014309.8
(22) Anmeldetag: 01.07.2005
(51) Int. Cl.: B60H 1/00

(54) **Luftklappenanordnung**
Arrangement of air flaps
Disposition des volets d'air

(30) Priorität: 28.07.2004 DE 102004036667
(43) Veröffentlichungstag der Anmeldung: 01.02.2006
(73) Patentinhaber: Behr GmbH & Co. KG, 70469 Stuttgart (DE)
(72) Erfinder: Bauer, Günter, 85139 Waldstetten (DE)

(56) Entgegenhaltungen:
- PATENT ABSTRACTS OF JAPAN Bd. 1999, Nr. 08, 30. Juni 1999 (1999-06-30) -& JP 11 059160 A (DENSO CORP), 2. März 1999 (1999-03-02)
- PATENT ABSTRACTS OF JAPAN Bd. 1998, Nr. 01, 30. Januar 1998 (1998-01-30) -& JP 09 226347 A (SUZUKI MOTOR CORP), 2. September 1997 (1997-09-02)
- PATENT ABSTRACTS OF JAPAN Bd. 1997, Nr. 07, 31. Juli 1997 (1997-07-31) -& JP 09 076726 A (DENSO CORP), 25. März 1997 (1997-03-25)
- PATENT ABSTRACTS OF JAPAN Bd. 017, Nr. 256 (M-1413), 20. Mai 1993 (1993-05-20) & JP 04 371746 A (NIPPONDENSO CO LTD), 24. Dezember 1992 (1992-12-24)
- PATENT ABSTRACTS OF JAPAN Bd. 1999, Nr. 01, 29. Januar 1999 (1999-01-29) & JP 10 278545 A (DENSO CORP), 20. Oktober 1998 (1998-10-20)

## Beschreibung

Die Erfindung betrifft eine Luftklappenanordnung eines Kraftfahrzeugbelüftungs-, -heizungs- und/oder -klimatisierungssystems, gemäß dem Oberbegriff des Anspruchs 1.

Beim Schließen bekannter Luftklappen kommt es häufig zu einem Anschlaggeräusch, weshalb Luftklappen bestehend aus zwei unterschiedlich harten Materialien entwickelt wurden, welche ein weiches Anschlagen ermöglichen. Allerdings kommt es hierbei zu einem "Plop"-Geräusch und/oder zu Schwingungsgeräuschen in Folge des Luftstroms, insbesondere in einem Winkelbereich zwischen 0 und 10°, aber auch in anderen Stellungen.

Ferner ist aus der EP 0 692 397 B1 eine Luftklappe für eine Heizungs- oder Klimaanlage eines Kraftfahrzeugs bekannt, die mittels einer mechanischen Betätigungseinrichtung zwischen zwei die Endpositionen der Luftklappe definierenden Gehäuseanschlägen verschwenkbar ist, wobei der Luftklappe zur Verringerung der Anschlaggeschwindigkeit eine wenigstens im Bereich der beiden Gehäuseanschläge wirksame Dämpfungseinrichtung zugeordnet ist. Dabei ist die Luftklappe mit einer über ihren gesamten Bewegungsbereich geschwindigkeitsabhängig wirksamen Dämpfungseinrichtung versehen. An der Luftklappe ist drehfest ein Fortsatz vorgesehen, der mit einem entsprechend der Bewegungsbahn des Fortsatzes gekrümmten und mit einem Dämpfungsmedium gefüllten Schlauchelement zusammenwirkt, das stationär an einem Gehäuseteil der Heizungs- oder Klimaanlage angeordnet ist. Eine derartige Dämpfungseinrichtung ist relativ aufwändig.

Aus der FR 2 669 277 A1 ist eine schwenkbare Klappe bekannt, die eine steife Platte und eine Dichtung aus einem elastischen Material aufweist. Die Dichtung weist ein Grundelement, das die Platte in einem Randbereich zumindest auf einer der beiden Plattenseiten bedeckt, und eine Dichtlippe auf, die sich von dem Grundelement nach außen, weg von der Platte erstreckt. Das Grundelement der Dichtung hat an seiner Fläche, die der Platte gegenüberliegt, wenigstens einen Vorsprung, der sich weg von der Fläche erstreckt und in Anlage an eine feste Wand gelangen kann, die sich parallel zur Platte erstreckt, so dass ein Endanschlag beabstandet von der Schwenkachse definiert wird. Die Basis der Dichtung kommt somit mit der Wand an einem oder mehreren Punkten oder einer oder mehrerer Linien in Kontakt und nicht über die gesamte Fläche. Die Form der hierbei verwendeten Dichtung ist jedoch relativ kompliziert.

Derartige Luftklappen lassen somit noch Wünsche offen.

Es ist Aufgabe der Erfindung, eine verbesserte Luftklappenanordnung zur Verfügung zu stellen.

Diese Aufgabe wird gelöst durch eine Luftklappenanordnung mit den Merkmalen des Anspruchs 1. Vorteilhafte Ausgestaltungen sind Gegenstand der Unteransprüche.

Erfindungsgemäß ist eine Luftklappenanordnung, insbesondere eines Kraftfahrzeugbelüftungs-, -heizungs- und/oder -klimatisierungssystems, vorgesehen, welche eine in einem Gehäuse angeordnete um eine Schwenkachse verschwenkbare Luftklappe umfasst, wobei an der Luftklappe ein fester Klappenbereich und ein elastischer Dichtungsbereich vorgesehen ist. Dabei ist am Klappenbereich zumindest funktional unabhängig vom Dichtungsbereich ein in Bewegungsrichtung vorstehender Anschlag vorgesehen, der mit einem am Gehäuse vorgesehenen Klappenanschlag derart zusammenwirkt, dass in einer Winkelstellung vor dem vollständigen Schließen der Luftklappe ein Kontakt zwischen dem Anschlag und dem Klappenanschlag besteht, bevor der beabstandet vom Anschlag ausgebildete Dichtungsbereich in Anlage an das Gehäuse gelangt, so dass beim Schließen der Luftklappe ab der Anlage des Anschlags an den Klappenanschlag eine erhöhte Schließkraft erforderlich ist. Dabei ist mindestens einer der Anschläge, bevorzugt der Anschlag am Klappenbereich elastisch ausgebildet, so dass eine winkeistellungsabhängige Kraft zum Schließen der Luftklappe erforderlich ist. Durch den Widerstand des Anschlags, wenn er in Anlage an dem Klappenanschlag ist, kann eine Antriebshysterese mit einfachen Mitteln ausgeglichen werden, so dass die Fertigungstoleranzen vergrößert werden können, wodurch sich unter anderem die Herstellungskosten senken lassen. Im vollständig geschlossenen Zustand liegt der Dichtungsbereich am Gehäuse an, ohne dass der elastisch ausgebildete Dichtungsbereich wesentlich verformt wird. Ferner kann durch das Schließen unter Wirkung einer definierten Gegenkraft und eine relativ lockere Anlage des Dichtungsbereichs am Gehäuse das "Plop"-Geräusch beim Schließen verhindert werden.

In einer alternativen Ausführungsvariante ist der Anschlag am Klappenbereich steif und/oder oder gefedert und der Klappenanschlag am Gehäuse elastisch ausgebildet ist.

Der Anschlag am Klappenbereich ist bevorzugt etwa quaderförmig ausgebildet, wobei auch andere Formen, wie beispielsweise Zylinder-, Halbzylinder, Kugeln und/oder Halbkugeln möglich sind. Dabei erstreckt sich der Anschlag parallel zur Schwenkachse der Luftklappe.

Der am Gehäuse ausgebildete Klappenanschlag ist bevorzugt steif ausgebildet, wobei er bevorzugt einstückig mit dem Gehäuse ausgebildet ist. Durch eine einstückige Ausgestaltung kann der Klappenanschlag gemeinsam mit dem Gehäuse gefertigt werden, was bevorzugt mittels Kunststoff-Spritzgießen erfolgt.

Der Klappenanschlag ist vorzugsweise im Bereich der Anlagefläche an den Anschlag abgerundet oder abgeflacht ausgebildet, wodurch eine Beschädigung des elastischen Anschlags vermieden werden kann und zudem die winkelabhängige Belastung entsprechend der Anlageflächenform beeinflusst werden kann.

Die Anlagefläche des. Klappenanschlags liegt vorzugsweise etwa in der gleichen Ebene, wie die Anlageflächen des Gehäuses für den Dichtbereich der Luftklappe. Die Anlageflächen des Gehäuses für den Dichtbereich der Luftklappe werden bevorzugt durch mindestens einen am Gehäuse vorgesehenen vorstehenden Rand gebildet, an dem der Dichtbereich der Luftklappe im vollständig geschlossenen Zustand anliegt.

Der Klappenanschlag ist bevorzugt auf derjenigen der Anlagefläche an den Anschlag gegenüberliegenden Seite versteift ausgebildet, so dass er sich auch bei größeren Kräften nicht verformt und Beschädigungen vermieden werden können. Alternativ dazu kann der Klappenanschlag beispielsweise mittels einer angespritzten Lasche auch federnd ausgebildet sein.

Erfindungsgemäß ist der Anschlag an der Luftklappe benachbart zur Schwenkachse angeordnet. In diesem Bereich sind bereits kleine Höhen für den Anschlag ausreichend, um in einem Winkelbereich kurz vor dem vollständigen Schließen der Luftklappe eine dem Schließen entgegengerichtete Kraft aufzubringen. Dadurch lässt sich unter anderem Material einsparen.

Der Anschlag gelangt vorzugsweise in Kontakt mit dem Klappenanschlag bei einem Öffnungswinkel von 2° bis 15°, insbesondere 2° bis 10° und besonders vorteilhaft bei einem Winkel von 5°+/- 2°. Der Winkel von ca. 5° für den ersten Kontakt von Anschlag und Klappenanschlag stellt sicher, dass keine unerwünschten Klappengeräusche, insbesondere keine Anschlaggeräusche auftreten.

Der Anschlag ist bevorzugt einstückig mit dem Dichtungsbereich ausgebildet, wobei die beiden Bereiche über einen Angussbereich verbunden sind, welcher keine Kräfte überträgt, sondern rein herstellungsbedingt ist. Alternativ dazu kann der Anschlag auch einzeln an den Dichtungsbereich angespritzt ausgeführt werden. Der Angussbereich ist bevorzugt seitlich versetzt bezüglich der Anlagefläche des Anschlags an den Klappenanschlag ausgebildet.

Ein entsprechender Anschlag kann natürlich auch beidseitig auf beiden Klappenbereichen vorgesehen sein. Entsprechend sind am Gehäuse zwei Klappenanschläge vorgesehen, die in den beiden Endstellungen Anschlaggeräusche verhindern.

Die Herstellung der Luftklappe erfolgt bevorzugt mittels Zwei-Komponenten-Spritzgießens, so dass keine nachträgliche Anbringung des Materials für den Dichtungsbereich und den Anschlag erforderlich ist, wodurch sich die Herstellung vereinfacht.

In einer erfindungsgemäßen Weiterbildung ist ein Kraftfahrzeugbelüftungs-, - heizungs- und/oder -klimatisierungssystem mit einem Gebläse, mindestens einem Steuerelement zur Beeinflussung von Luftströmungen und/oder einem Verdampfer und/oder einem Heizelement, sowie mit einer erfindungsgemäßen Luftklappenanordnung ausgestattet.

Im Folgenden wird die Erfindung anhand eines Ausführungsbeispiels unter Bezugnahme auf die Zeichnung im Einzelnen erläutert. In der Zeichnung zeigen:
- Fig. 1: eine perspektivische Ansicht einer Klappenanordnung gemäß dem Ausführungsbeispiel in einer Stellung 5° vor dem vollständigen Schließen, und
- Fig. 2: eine Detailansicht aus einer anderen Perspektive.

Eine Luftklappenanordnung, bestehend aus einem Gehäuse 1 und einer in dem Gehäuse 1 um eine Schwenkachse S verschwenkbar angeordneten Luftklappe 2, welche eine Öffnung im Gehäuse 1 bei Bedarf verschließt oder ganz oder gegebenenfalls auch teilweise öffnet, wird von einem Schritt-Stellmotor (nicht dargestellt) auf bekannte Weise betätigt.

Die vorliegend plattenartige Luftklappe 2 weist einen harten, aus Polypropylen bestehenden Klappenbereich 3 und einen um diesen angeordneten weichen, aus einem thermoplastischen Elastomer, wie beispielsweise Santoprene ®, bestehenden Dichtungsbereich 4 auf. Dabei ist der Dichtungsbereich 4 vorliegend dünner ausgebildet als der Klappenbereich 3.

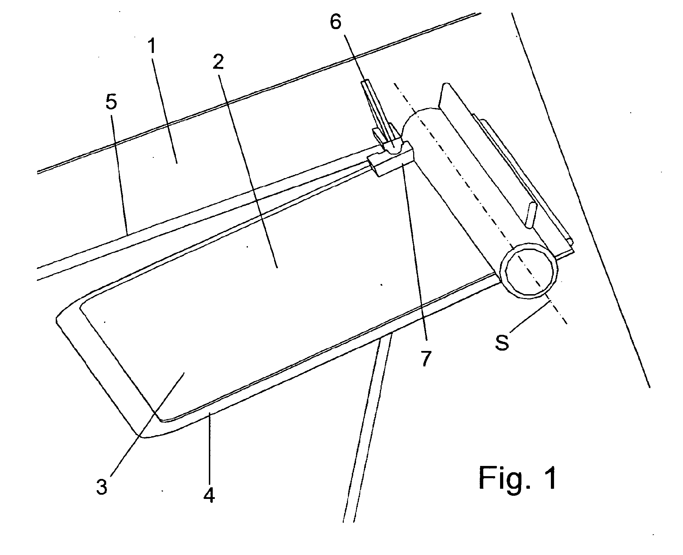

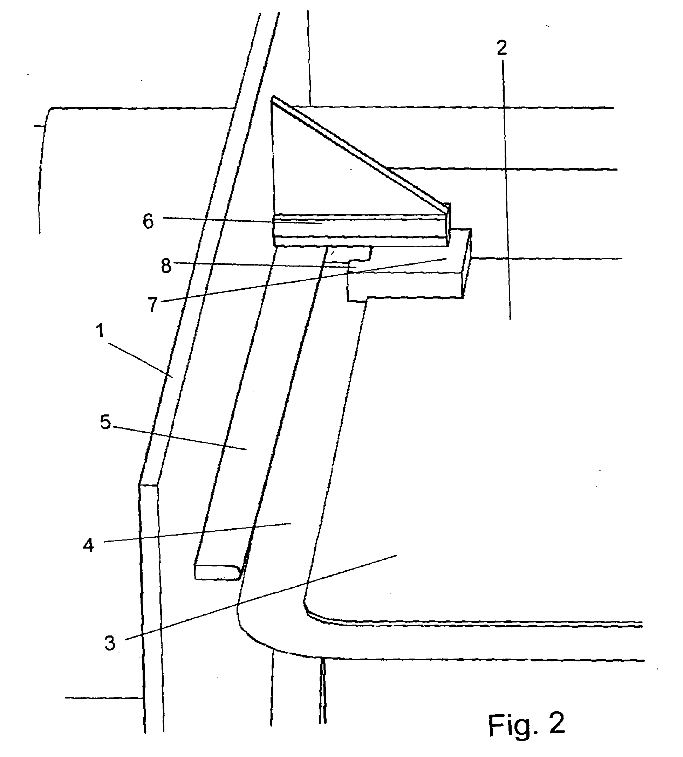

Am Gehäuse 1 ist ein vorstehender Rand 5 vorgesehen, an dessen einer, in den Figuren 1 und 2 nicht sichtbaren Seitenfläche im geschlossenem Zustand der Dichtungsbereich 4 anliegt.

Ferner ist am Gehäuse 1 in der Nähe der Schwenkachse S ein zusätzlicher Klappenanschlag 6 vorgesehen, dessen Anlagefläche gemäß dem vorliegenden Ausführungsbeispiel bis zur Anlagefläche des Randes 5 reicht, also nicht in Richtung der Luftklappe 2 übersteht. Der Klappenanschlag 6 ist parallel zur Schwenkachse S ausgerichtet und steht so weit vor, dass er bis in den Klappenbereich 3 hineinragt (vgl. Fig. 1). Der Klappenanschlag 6 wirkt mit einem an späterer Stelle näher beschriebenen elastischen Anschlag 7 zusammen, wofür er im Bereich seiner Anlagefläche an den Anschlag 7 abgerundet ausgebildet ist, so dass Beschädigungen des Anschlags 7 sicher vermieden werden können und zudem die zum Schließen erforderliche Kraft langsam ansteigt. Auf derjenigen der Anlagefläche gegenüberliegenden Seite des Klappenanschlags 6 ist eine Versteifung in Form einer dreieckigen Platte vorgesehen, die zwischen dem Gehäuse 1 und der Seite des Klappenanschlags 6 ausgebildet ist.

Der Anschlag 7 besteht aus dem gleichen Material wie der Dichtungsbereich 4 und ist an einer Fläche des Klappenbereichs 3 in der Nähe des Dichtungsbereichs 4 und der Schwenkachse S über die Klappenfläche 3 vorstehend vorgesehen, so dass er beim Schließen bereits bei einer Klappenöffnung von 5° in Kontakt mit dem Klappenanschlag 6 gelangt, also deutlich bevor der Dichtbereich 4 in Anlage an den Rand 5 gelangt. Vorliegend entspricht dies einer Höhe von ca. 3 mm.

Aus fertigungstechnischen Gründen ist der Anschlag 7 mit dem Dichtungsbereich 4 verbunden, so dass eine einfache Herstellung der Luftklappe 2 mittels Zwei-Komponenten-Spritzgießens erfolgen kann. Der eigentliche Anschlagbereich ist etwa quaderförmig ausgebildet, der Angussbereich 8 ist so weit seitlich vom Anlagebereich des Klappenanschlags 6 angeordnet, dass der elastische Dichtungsbereich 4 im Falle einer Anlage nicht oder nur unwesentlich elastisch verformt wird. Ferner ragt der Angussbereich 8 nur so weit nach außen, dass keine Anlage an den Rand 5 erfolgt (vgl. Fig. 2).

Auf Grund der Vorspannung in den letzten Winkelstellungen vor dem Schließen kann eine Antriebshysterese, resultierend aus einem Getriebespiel des Schritt-Verstellmotors, einem Spiel des Motorhalters, einem Spiel vom Abtrieb des Schritt-Verstellmotors zu einer Verbindungswelle oder ähnlichem, einem Spiel zwischen der Verbindungswelle oder ähnlichem und der Luftklappe 2 sowie einem Lagerspiel der Luftklappe 2, verringert oder vollständig ausgeglichen werden, so dass die Feinabstimmung von Antrieb bis zur Luftklappe 2 erheblich vereinfacht wird. Ferner lassen sich Anschlaggeräusche oder Schwingungsgeräusche (Flattern) der Luftklappe 2 vermeiden.

Gemäß einer alternativen Ausführungsform kann der Anschlag auch beidseitig und entsprechend ein zweiter Klappenanschlag am Gehäuse vorgesehen sein, so dass in beiden Endstellungen ein weicher Luftklappenanschlag vorgesehen ist.

### Bezugszeichenliste

- 1: Gehäuse
- 2: Luftklappe
- 3: Klappenbereich
- 4: Dichtungsbereich
- 5: Rand
- 6: Klappenanschlag
- 7: Anschlag
- 8: Angussbereich
- S: Schwenkachse

## Patentansprüche

1. Luftklappenanordnung, insbesondere eines Kraftfahrzeugbelüftungs-, - heizungs- und/oder -klimatisierungssystems, weiche eine in einem Gehäuse (1) angeordnete um eine Schwenkachse (S) verschwenkbare Luftklappe (2) umfasst, wobei an der Luftklappe (2) ein fester Klappenbereich (3) und ein elastischer Dichtungsbereich (4) vorgesehen ist, wobei am Klappenbereich (3) zumindest funktional unabhängig vom Dichtungsbereich (4) ein in Bewegungsrichtung vorstehender Anschlag (7) vorgesehen ist, der mit einem am Gehäuse (1) vorgesehenen Klappenanschlag (6) derart zusammenwirkt, dass in einer Winkelstellung vor dem vollständigen Schließen der Luftklappe (2) ein Kontakt zwischen dem Anschlag (7) und dem Klappenanschlag (6) besteht, bevor der beabstandet vom Anschlag (7) ausgebildete Dichtungsbereich (4) in Anlage an das Gehäuse (1) gelangt, **dadurch gekennzeichnet, dass** der Anschlag (7) an der Luftklappe (2) benachbart zur Schwenkachse (S) angeordnet ist.

2. Luftklappenanordnung nach Anspruch 1, **dadurch gekennzeichnet, dass** der Anschlag (7) am Klappenbereich (3) elastisch ausgebildet ist.

3. Luftklappenanordnung nach Anspruch 1 oder 2, **dadurch gekennzeichnet, dass** der Anschlag (7) am Klappenbereich (3) etwa quader-, zylinder- und/oder kugelförmig ausgebildet ist.

4. Luftklappenanordnung nach einem der vorhergehenden Ansprüche, **dadurch gekennzeichnet, dass** der Klappenanschlag (6) am Gehäuse (1) steif und/oder oder gefedert ausgebildet ist.

5. Luftklappenanordnung nach Anspruch 1, **dadurch gekennzeichnet, dass** der Anschlag (7) am Klappenbereich (3) steif und/oder oder gefedert ausgebildet und der Klappenanschlag (6) am Gehäuse (1) elastisch ausgebildet ist.

6. Luftklappenanordnung nach einem der vorhergehenden Ansprüche, **dadurch gekennzeichnet, dass** der Klappenanschlag (6) im Bereich der Anlagefläche an den Anschlag (7) abgerundet oder abgeflacht ausgebildet ist.

7. Luftklappenanordnung nach einem der vorhergehenden Ansprüche, **dadurch gekennzeichnet, dass** die Anlagefläche des Klappenanschlags (6) etwa in der gleichen Ebene liegt, wie die Anlageflächen des Gehäuses (1) für den Dichtbereich (4) der Luftklappe (2).

8. Luftklappenanordnung nach Anspruch 7, **dadurch gekennzeichnet, dass** die Anlageflächen des Gehäuses (1) für den Dichtbereich (4) der Luftklappe (2) durch mindestens einen vorstehenden Rand (5) gebildet sind.

9. Luftklappenanordnung nach einem der vorhergehenden Ansprüche, **dadurch gekennzeichnet, dass** der Klappenanschlag (6) auf derjenigen der Anlagefläche an den Anschlag (7) gegenüberliegenden Seite versteift und/oder gefedert ausgebildet ist.

10. Luftklappenanordnung nach einem der vorhergehenden Ansprüche, **dadurch gekennzeichnet, dass** der Anschlag (7) in Kontakt gelangt mit dem Klappenanschlag (6) bei einem Öffnungswinkel von 5°+/- 2°.

11. Luftklappenanordnung nach einem der vorhergehenden Ansprüche, **dadurch gekennzeichnet, dass** der Anschlag (7) einstückig mit dem Dichtungsbereich (4), verbunden über einen Angussbereich (8) ausgebildet oder einzeln an diesen angespritzt ist.

12. Luftklappenanordnung nach Anspruch 11, **dadurch gekennzeichnet, dass** der Angussbereich (8) seitlich versetzt bezüglich der Anlagefläche des Anschlags (7) an den Klappenanschlag (6) ist.

13. Luftklappenanordnung nach einem der vorhergehenden Ansprüche, **dadurch gekennzeichnet, dass** an beiden Flächen der Luftklappe (2) ein Anschlag (7) vorgesehen ist.

14. Luftklappenanordnung nach einem der vorhergehenden Ansprüche, **dadurch gekennzeichnet, dass** die Luftklappe (2) mittels ZweiKomponenten-Spritzgießens hergestellt ist.

15. Kraftfahrzeugbelüftungs-, -heizungs- und/oder -klimatisierungssystem mit einem Gebläse, mindestens einem Steuerelement zur Beeinflussung von Luftströmungen und/oder einem Verdampfer und/oder einem Heizelement, **dadurch gekennzeichnet, dass** dieses eine Luftklappenanordnung gemäß mindestens einem der vorhergehenden Ansprüche enthält.

## Claims

1. An arrangement of air flaps, in particular for a motor vehicle ventilation, heating and/or air conditioning system, which comprises an air flap (2) which is positioned in a housing (1) and can be pivoted about an axis of pivoting (S), a fixed flap area (3) and an elastic sealing area (S) being provided on the air flap (2), there being provided in the flap area (3) a stop (7) projecting in the direction of motion which is at least functionally independent of the sealing area (4) and co-operates with a flap stop (6) provided on the housing (1) in such a manner that contact is made between the stop (7) and the flap stop (6) at an angle prior to the complete closure of the air flap (2) before the sealing area (4) located a certain distance from the stop (7) comes to rest on the housing (1),
**characterised in that**
the stop (7) is positioned on the air flap (2) adjacent to the axis of pivoting (S).

2. An arrangement of air flaps in accordance with claim 1,
**characterised in that**
the stop (7) is configured on the flap area (3) in an elastic manner.

3. An arrangement of air flaps in accordance with claim 1 or 2,
**characterised in that**
the stop (7) is configured on the flap area (3) approximately in the manner of a rectangular box, cylinder or sphere.

4. An arrangement of air flaps in accordance with one of the preceding claims,
**characterised in that**
the flap stop (6) is configured on the housing (1) rigidly and/or spring mounted.

5. An arrangement of air flaps in accordance with claim 1,
**characterised in that**
the stop (7) is configured on the flap area (3) rigidly and/or spring mounted, and the flap stop (6) is configured on the housing (1) in an elastic manner.

6. An arrangement of air flaps in accordance with one of the preceding claims,
**characterised in that**
the flap stop (6) is configured in a rounded or flattened manner in the area of the stop face on the stop (7).

7. An arrangement of air flaps in accordance with one of the preceding claims,
**characterised in that**
the stop face on the flap stop (6) lies approximately in the same plane as the stop faces on the housing (1) for the sealing area (4) of the air flap (2).

8. An arrangement of air flaps in accordance with claim 7,
**characterised in that**
the stop flaps of the housing (1) for the sealing area (4) of the air flap (2) are formed by at least one projecting edge (5).

9. An arrangement of air flaps in accordance with one of the preceding claims,
**characterised in that**
the flap stop (6) is configured in a reinforced and/or spring-mounted manner on the side opposite the stop face of the stop (7).

10. An arrangement of air flaps in accordance with one of the preceding claims,
**characterised in that**
the stop (7) comes into contact with the flap stop (6) at an angle of opening of 5° ± 2°.

11. An arrangement of air flaps in accordance with one of the preceding claims,
**characterised in that**
the stop (7) is formed in one piece with the sealing area (4) connected by a casting-on area (8) or individually injection moulded thereto.

12. An arrangement of air flaps in accordance with claim 11,
**characterised in that**
the casting-on area (8) is laterally offset in relation to the stop faces between the stop (7) and the flap stop (6).

13. An arrangement of air flaps in accordance with one of the preceding claims,
**characterised in that**
a stop (7) is provided on both faces of the air flap (2).

14. An arrangement of air flaps in accordance with one of the preceding claims,
**characterised in that**
the air flap (2) is manufactured by means of co-injection moulding.

15. A motor vehicle ventilation, heating and/or air conditioning system having a fan, at least one control element for influencing air flows and/or an evaporator and/or a heating element,
**characterised in that**
the latter contains an arrangement of air flaps in accordance with at least one of the preceding claims.

## Revendications

1. Agencement de volets d'air, en particulier d'un système de ventilation, de chauffage et / ou de climatisation d'un véhicule automobile, agencement qui comprend un volet d'air (2) disposé dans un carter (1) et pouvant pivoter autour d'un axe de pivotement (S), où il est prévu, sur le volet d'air (2), une zone de volet fixe (3) et une zone d'étanchéité élastique (4), où il est prévu, sur la zone de volet (3) au moins fonctionnellement indépendante de la zone d'étanchéité (4), une butée (7) en saillie dans la direction de déplacement, butée qui agit de façon conjuguée avec une butée de volet (6) prévue sur le carter (1), de manière telle que, dans une position angulaire, avant la fermeture complète du volet d'air (2), il subsiste un contact entre la butée (7) et la butée de volet (6), avant que la zone d'étanchéité (4) configurée en étant espacée de la butée (7) vienne en appui sur le carter (1),
**caractérisé en ce que** la butée (7) est disposée, sur le volet d'air (2), en étant contiguë à l'axe de pivotement (S).

2. Agencement de volets d'air selon la revendication 1, **caractérisé en ce que** la butée (7) est configurée de façon élastique sur la zone de volet (3).

3. Agencement de volets d'air selon la revendication 1 ou 2, **caractérisé en ce que** la butée (7) est configurée, sur la zone de volet (3), en ayant une forme à peu près carrée, cylindrique et / ou sphérique.

4. Agencement de volets d'air selon l'une quelconque des revendications précédentes, **caractérisé en ce que** la butée de volet (6) est configurée, sur le carter (1), de façon rigide et / ou à ressort.

5. Agencement de volets d'air selon la revendication 1, **caractérisé en ce que** la butée (7) est configurée, sur la zone de volet (3), de façon rigide et / ou à ressort, et la butée de volet (6) est configurée, sur le carter (1), de façon élastique.

6. Agencement de volets d'air selon l'une quelconque des revendications précédentes, **caractérisé en ce que** la butée de volet (6) est configurée, dans la zone de la surface venant en appui sur la butée (7), en étant arrondie ou aplatie.

7. Agencement de volets d'air selon l'une quelconque des revendications précédentes, **caractérisé en ce que** la surface d'appui de la butée de volet (6) se trouve à peu près dans le même plan que les surfaces d'appui du carter (1), pour la zone d'étanchéité (4) du volet d'air (2).

8. Agencement de volets d'air selon la revendication 7, **caractérisé en ce que** les surfaces d'appui du carter (1), pour la zone d'étanchéité (4) du volet d'air (2), sont formées par au moins un bord (5) faisant saillie.

9. Agencement de volets d'air selon l'une quelconque des revendications précédentes, **caractérisé en ce que** la butée de volet (6), sur le côté qui fait face à la surface venant en appui sur la butée (7), est conçue de façon renforcée et / ou montée sur ressort.

10. Agencement de volets d'air selon l'une quelconque des revendications précédentes, **caractérisé en ce que** la butée (7) vient au contact de la butée de volet (6) suivant un angle d'ouverture de 5° ± 2°.

11. Agencement de volets d'air selon l'une quelconque des revendications précédentes, **caractérisé en ce que** la butée (7) est conçue en formant une seule et même pièce avec la zone d'étanchéité (4) et en étant reliée par une zone de culot d'injection (8), ou bien en étant moulée isolément sur cette zone d'étanchéité.

12. Agencement de volets d'air selon la revendication 11, **caractérisé en ce que** la zone de culot d'injection (8) est décalée latéralement par rapport à la surface de la butée (7) venant en appui sur la butée de volet (6).

13. Agencement de volets d'air selon l'une quelconque des revendications précédentes, **caractérisé en ce qu'**il est prévu une butée (7) sur les deux surfaces du volet d'air (2).

14. Agencement de volets d'air selon l'une quelconque des revendications précédentes, **caractérisé en ce que** le volet d'air (2) est fabriqué au moyen d'un moulage par injection à deux composants.

15. Système de ventilation, de chauffage et / ou de climatisation d'un véhicule automobile, comprenant un ventilateur, au moins un élément de commande servant à influencer les flux d'air, et / ou un évaporateur et / ou un élément chauffant,
**caractérisé en ce que** ce système comprend un agencement de volets d'air conformément à au moins l'une quelconque des revendications précédentes.
